(19) Europäisches Patentamt
European Patent Office
Office européen des brevets

(11) Veröffentlichungsnummer: **0 027 209**
**B1**

(12) # EUROPÄISCHE PATENTSCHRIFT

(45) Veröffentlichungstag der Patentschrift: **12.10.83**

(51) Int. Cl.³: **C 07 C 91/12,** C 08 G 18/18

(21) Anmeldenummer: **80105942.9**

(22) Anmeldetag: **01.10.80**

(54) **N,N-Dimethyl-N'-isobutyl-N'-Beta-hydroxyethyl-1,3-propylendiamin und Verfahren zu seiner Herstellung.**

(30) Priorität: **04.10.79 DE 2940256**

(43) Veröffentlichungstag der Anmeldung: **22.04.81 Patentblatt 81/16**

(45) Bekanntmachung des Hinweises auf die Patenterteilung: **12.10.83 Patentblatt 83/41**

(84) Benannte Vertragsstaaten: **BE DE FR GB**

(56) Entgegenhaltungen:

**EP-A-0 001 616**
**DE-A-2 625 684**

(73) Patentinhaber: **Ruhrchemie Aktiengesellschaft, Bruchstrasse 219, D-4200 Oberhausen 13 (DE)**

(72) Erfinder: **Weber, Jürgen, Dr. Dipl.-Chem., Bunsenstrasse 17, D-4200 Oberhausen 13 (DE)**
Erfinder: **Falk, Volker, Dr. Dipl.-Chem., Frankfurter Strasse 333, D-4223 Voerde (DE)**
Erfinder: **Kniep, Claus, Rosenstrasse 93, D-4200 Oberhausen 1 (DE)**

(74) Vertreter: **Reichelt, Karl-Heinz, Dr., m. Br. Ruhrchemie Aktiengesellschaft Abt. PLD Postfach 13 01 60, D-4200 Oberhausen 13 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# N,N-Dimethyl-N'-isobutyl-N'-Beta-hydroxyethyl-1,3-propylendiamin und Verfahren zu seiner Herstellung

Die Erfindung betrifft die chemische Verbindung N,N-Dimethyl-N'-isobutyl-N'-β-hydroxyethyl-1,3-propylendiamin und ein Verfahren zu ihrer Herstellung.

Es ist bekannt, dass die Addition von Verbindungen mit beweglichem Wasserstoff an Isocyanate, die zu Polyurethanen führt durch tertiäre Amine katalysiert wird. Auch bestimmte tertiäre Hydroxyalkylamine wurden als Katalysatoren für die Herstellung von Polyurethanen aus den genannten Ausgangsstoffen beschrieben. So kann man für diesen Zweck z.B. Dimethyläthanolamin verwenden. Als nachteilig erweist es sich jedoch, dass diese Verbindung ziemlich flüchtig ist und schlechtes Gebildungs- und Härtungsvermögen besitzt. Daher setzt man Dimethyläthanolamin im allgemeinen nur als Co-Katalysator zusammen mit anderen Katalysatoren ein.

In der DE-OS 2 625 684 ist ein Verfahren zur Beschleunigung von Additions- und Polymerisationsreaktionen organischer Isocyanate durch basische Katalyse beschrieben.

Als Katalysator finden bei dieser Arbeitsweise Hydroxyalkyl-tert.-amine mit wenigstens einer primären Hydroxyäthylgruppe der allgemeinen Formel

$$Y-\overset{CH_3}{\overset{|}{N}}-[CH_2-CH_2-\overset{CH_3}{\overset{|}{N}}]_n-Z$$

mit Y: $CH_3$ oder Z
Z: $CH_2-CH_2-OH$
n: 1 oder 2

Anwendung.

Diese Verbindungen eignen sich zwar als Katalysatoren für die Herstellung von Polyurethanen aus Isocyanaten. Ihre Herstellung nach der Leuckart-Synthese durch Umsetzung von Aminen mit Aldehyden oder Ketonen durch Erhitzen mit Ameisensäure ist aber technisch aufwendig und, bedingt durch den erforderlichen hohen Ameisensäure-Überschuss und eine umständliche Aufarbeitung des Reaktionsprodukts nicht immer wirtschaftlich durchzuführen. Es bestand daher die Aufgabe, einen leicht herzustellenden Katalysator für die Addition von Verbindungen mit beweglichem Wasserstoff an Isocyanate zu entwickeln, der grosstechnisch auf einfache Art und Weise herstellbar ist.

Die Erfindung besteht in der chemischen Verbindung N,N-Dimethyl-N'-isobutyl-N'-β-hydroxyethyl-1,3-propylendiamin.

Die Herstellung der neuen Verbindung kann erfindungsgemäss in einer dreistufigen mit hoher Selektivität ablaufenden Synthese erfolgen.

Im ersten Reaktionsschritt werden Dimethylaminopropylamin und Isobutyraldehyd zur entsprechenden Schiff'schen Base umgesetzt. Beide Ausgangsstoffe sind grosstechnisch verfügbar und die Reaktion erfolgt mit hoher Selektivität. Obgleich Dimethylaminopropylamin eine starke Base ist, geht der Isobutyraldehyd überraschenderweise keine Aldolkondensation ein; weder Isobutyraldol noch andere Nebenprodukte werden gebildet.

Die aus der Umsetzung von Amin und Aldehyd resultierende Schiff'sche Base wird darauf im zweiten Reaktionsschritt zu N,N-Dimethyl-N'-isobutyl-1,3-propylendiamin hydriert. Die Umsetzung mit Wasserstoff kann nach für Schiff'sche Basen bekannten Verfahren erfolgen. Besonders bewährt haben sich Nickelkatalysatoren mit einem Nickelgehalt von 30 bis 50 Gewichts-% und Trägern wie Kieselsäure, Aluminiumoxid oder Aluminiumsilikaten. Die Reaktion wird üblicherweise bei 80 - 130 °C und 80 - 120 bar durchgeführt.

Schliesslich wird im dritten Reaktionsschritt zur Einführung einer Hydroxyethylgruppe in das Molekül das substituierte Propylendiamin mit Ethylenoxid umgesetzt. Die Addition des Ethylenoxids erfolgt zweckmässig in Gegenwart eines stark sauren Ionenaustauschers, bei Temperaturen zwischen 80 und 150 °C und Drücken von 0 - 20 bar. Unter diesen Bedingungen verläuft die Reaktion mit einer Selektivität von 80 - 90% bezogen auf das substituierte Hydroxylamin.

Die neue Verbindung hat sich als ausgezeichneter Katalysator für die Herstellung von Polyurethanharzen aus Isocyanaten und Verbindungen mit beweglichem Wasserstoffatom erwiesen. Auf diesem Anwendungsgebiet kann sie sowohl allein als auch zusammen mit anderen tertiären Aminen oder mit metallorganischen Verbindungen verwendet werden. Die Art der Reaktionskomponenten unterliegt hierbei keiner Beschränkung. So kann man Isocyanate mit allen Polyolen, die zur Herstellung von Polyurethanen verwendet werden in Gegenwart der erfindungsgemässen Verbindung als Katalysator umsetzen. Geeignete, mehrwertige Alkohole sind Glykol, Glycerin und höhere Polyole, auch wenn diese andere funktionelle Gruppen enthalten, z.B. Saccharose und Aminopolyole. Die Hydroxyfunktion des Polyols kann primär oder sekundär oder ein Gemisch von beiden sein. Im allgemeinen kann jedes Polyol verwendet werden, das wenigstens zwei aktive Wasserstoffatome aufweist.

Ausser als Katalysator bei der Herstellung von Polyurethanen kann die neue Verbindung auch als ein wertvolles Zwischenprodukt bei der Synthese von Pharmazeutika eingesetzt werden. So führt die Umsetzung mit 3,4,5-Trimethoxybenzoylchlorid zu einem Ester mit kardioaktiven Eigenschaften.

In den folgenden Beispielen sind die Herstellung der neuen Verbindung und ihre physikalischen Eigenschaften näher beschrieben.

*Beispiel*

**1. Stufe**

Herstellung der Schiff'schen Base aus Dimethylaminopropylamin (DMAPA) und Isobutyraldehyd.

Zu 1 020 g (10 Mol) DMAPA in einem 4-1-Dreihalskolben werden unter Rühren innerhalb von 2 Stunden 721 g (10 Mol) Isobutyraldehyd tropfenweise zugesetzt. Durch Kühlung hält man die Reaktionstemperatur unterhalb 30 °C. Während der 120 Min. dauernden Nachreaktion beträgt die Temperatur etwa 20 °C. Nach Beendigung der Reaktion liegt ein

2-Phasen-System vor. Die wässrige Phase, die nahezu der stöchiometrisch zu erwartenden Menge Wasser entspricht, wird abgetrennt und die organische Phase der katalytischen Hydrierung zugeführt.
Umsatz: > 90%
Ausbeute: 1 451 g (93% d. Th.)

**2. Stufe**

Katalytische Hydrierung der Schiff'schen Base aus DMAPA und Isobutyraldehyd zu N,N-Dimethyl-N'-isobutyl-1,3-propylendiamin.

1451 g (9,3 Mol) der Schiff'schen Base werden in einem 3-1 V4A-Autoklaven in Gegenwart von 10 Gew.-% Nickel-Katalysator (Zusammensetzung: etwa 52 Gew.-% Ni, Rest Kieselgur) bezogen auf die Schiff'sche Base bei 80°C und 80 bar hydriert. Die Reaktionszeit beträgt 2 Stunden. Nach destillativer Aufarbeitung des Reaktionsproduktes erhält man 1249 g (85% d. Th.) N,N-Dimethyl-N'-isobutyl-1,3-propylendiamin in einer Reinheit von > 98%.

**3. Stufe**

Anlagerung von Ethylenoxid an N,N-Dimethyl-N'-isobutyl-1,3-propylendiamin zum N,N-Dimethyl-N'-isobutyl-N'-hydroxyethyl-1,3-propylendiamin.

474 g (3 Mol) N,N-Dimethyl-N'-isobutyl-1,3-propylendiamin und 10 Gew.-%, bezogen auf das Propylendiamin, eines stark sauren Ionenaustauschers werden in einem 2,8 1-Autoklaven auf 130°C erhitzt. Anschliessend gibt man 145 g (3,3 Mol) Ethylenoxid über eine Feindosierpumpe zu. Während der Ethylenoxidzugabe und der anschliessenden Nachreaktion soll die Temperatur zwischen 130°C und 160°C liegen. Bei höheren Temperaturen entstehen grössere Anteile Nebenprodukte, die auf die Reaktion des Ethylenoxids mit sich selbst zurückzuführen sind. Nach beendeter Ethylenoxid-Zudosierung wird mittels Stickstoff ein Druck von 20 bar eingestellt. Unter diesen Bedingungen belässt man den Reaktionsansatz noch 1 Std. Nach Beendigung der Nachreaktion wird das Reaktionsprodukt fraktioniert destilliert. Man erhält N,N-Dimethyl-N'-isobutyl-N'-$\beta$-hydroxyethyl-1,3-propylendiamin in einer Ausbeute von 545 g (90% d. Th.) und einer Reinheit von > 98% als farblose, schwach nach Amin riechende Flüssigkeit mit folgenden physikalischen Eigenschaften:

$Kp_1$: 102°C
$n_D^{20}$: 1,4525
$D_4^{20}$: 0,885

und der nachstehenden chemischen Analyse:

| | | | | |
|---|---|---|---|---|
| ber.: | C 65,30 | H 12,95 | N 13,84 | O 7,90 |
| gef.: | C 65,80 | H 12,55 | N 13,68 | O 7,96 |

**Patentansprüche**

1. Die chemische Verbindung N,N-Dimethyl-N'-isobutyl-N'-$\beta$-hydroxyethyl-1,3-propylendiamin.

2. Verfahren zur Herstellung von N,N-Dimethyl-N'-isobutyl-N'-$\beta$-hydroxyethyl-1,3-propylendiamin, dadurch gekennzeichnet, dass Dimethylaminopropylamin mit Isobutyraldehyd zur entsprechenden Schiff'schen Base umgesetzt, die Schiff'sche Base zu N,N-Dimethyl-N'-isobutyl-1,3-propylendiamin hydriert und das substituierte Propylendiamin mit Ethylenoxyd zur Reaktion gebracht wird.

**Claims**

1. The chemical compound N,N-dimethyl-N'-isobutyl-N'-$\beta$-hydroxyethyl-1.3-propylenediamine.

2. A process for preparing N,N-dimethyl-N'-isobutyl-N'-$\beta$-hydroxyethyl-1.3-propylenediamine, characterised in that dimethylaminopropylamine is reacted with isobutyraldehyde to form the corresponding Schiff base, the Schiff base is hydrogenated to N,N-dimethyl-N'-isobutyl-1.3-propylenediamine, and the substituted propylenediamine is reacted with ethylene oxide.

**Revendications**

1. Le composé chimique N,N-diméthyl-N'-isobutyl-N'-$\beta$-hydroxyéthyl-1,3-propylène-diamine.

2. Procédé de préparation de la N,N-diméthyl-N'-isobutyl-N'-$\beta$-hydroxyéthyl-1,3-propylène-diamine, caractérisé en ce que l'on fait réagir la diméthylaminopropylamine avec l'isobutyraldéhyde, ce qui donne la base de Schiff correspondante qu'on hydrogène en N,N-diméthyl-N'-isobutyl-1,3-propylène-diamine, qu'on fait réagir avec l'oxyde d'éthylène.